# EUROPEAN PATENT APPLICATION

(11) **EP 4 683 285 A1**
(43) Date of publication of application: **21.01.2026**
(21) Application number: 24769989.5
(22) Date of filing: 14.03.2024
(51) Int. Cl.: H04L 41/0816, H04W 52/02

(54) **CLOUD PLATFORM CONTROL METHOD AND APPARATUS, AND DEVICE**

(30) Priority: 14.03.2023 CN 202310265512
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Ting, Beijing 100053 (CN); ZHANG, Xiaohua, Beijing 100053 (CN); SUN, Qi, Beijing 100053 (CN); LI, Nan, Beijing 100053 (CN); HAN, Yantao, Beijing 100053 (CN); CHI, Gangyi, Beijing 100053 (CN)
(74) Representative: Maiwald GmbH
(86) International application number: PCT/CN2024/081649
(87) International publication number: WO 2024/188299

(57) **Abstract**

The disclosure discloses a method and an apparatus for controlling a cloud platform. The method includes sending a cloud resource configuration request message to the cloud platform. The cloud resource configuration request message is used to configure the cloud platform resource for the network function. **In** embodiments of the disclosure, the network function may control the cloud platform resource. For example, the network function may trigger the cloud platform to enter an energy-saving mode by the cloud resource configuration request message, or may also trigger the cloud platform to recover from the energy-saving mode to a high-performance mode, thereby ensuring a service performance to a maximum extent while saving energy in the cloud platform.

## Description

### CROSS-REFERENCE TO RELATED APPLICATION

This application is based upon and claims priority to Chinese Patent Application No. 202310265512.X, filed on March 14, 2023, the entire contents of which are incorporated herein by reference.

### TECHNICAL FIELD

The disclosure relates to a field of communication technologies, and more particularly to a method and an apparatus for controlling a cloud platform, and a storage medium.

### BACKGROUND

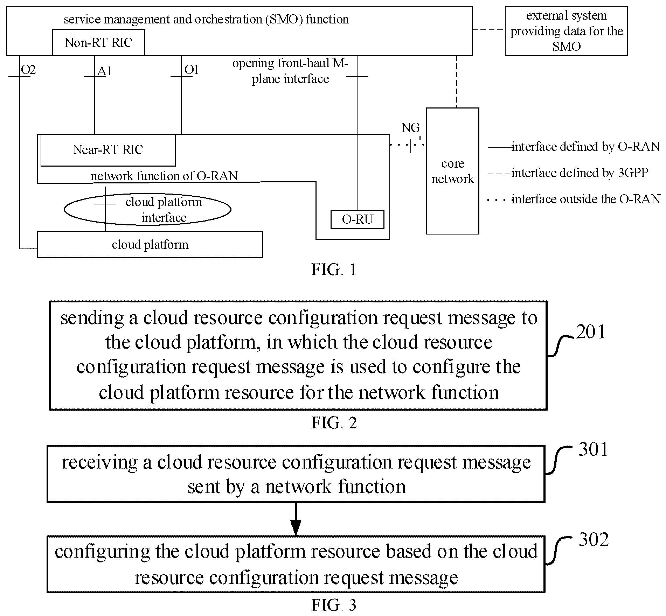

As illustrated in FIG. 1, a service management and orchestration (SMO) function is defined in a architecture of an open-radio access network (O-RAN) which sends a configuration parameter to a cloud platform (or an open cloud (O-Cloud)) via a standardized interface O2. In addition, it is supported that a network function (NF) of the O-RAN or the SMO subscribes some information of the O-Cloud via a notification application programming interface (API). However, in the related art, there is not provided a detailed implementation solution about how the NF of the O-RAN controls a resource of the cloud platform.

### SUMMARY

Embodiments of the disclosure provide a method and an apparatus for controlling a cloud platform, and a device, to solve a problem of how the NF of the O-RAN controls a cloud platform resource.

In a first aspect of the disclosure, there is provided a method for controlling a cloud platform, applied to a network function. The method includes: sending a cloud resource configuration request message to the cloud platform, in which the cloud resource configuration request message is used to configure a cloud platform resource for the network function.

Alternatively, the network function includes one of: a long term evolution base station; a new radio base station; a centralized unit or a centralized unit of an open-radio access network (O-RAN); a distribution unit or a distribution unit of the O-RAN; or a near-real time radio intelligent controller.

Alternatively, the cloud resource configuration request message includes at least one of: a network function identifier; an identifier of a network function instance; configuration information of the cloud platform resource; a timer; or a time offset, in which, the timer and/or time offset indicate a time period needed to await before executing the configuration information of the cloud platform resource.

Alternatively, sending the cloud resource configuration request message to the cloud platform includes: monitoring a service traffic and/or a utilization of the cloud platform resource within the time period indicated by the timer and/or the time offset; and sending the cloud resource configuration request message to the cloud platform in the case that the service traffic and/or the utilization of the cloud platform resource meets a preset requirement, in which the cloud resource configuration request message includes the configuration information of the cloud platform resource.

Alternatively, the configuration information of the cloud platform resource includes at least one of: a power state of a central processing unit (CPU); a performance state of the CPU; a frequency of the CPU; memory information; pining information of a CPU core; or a number of CPU cores.

Alternatively, before sending the cloud resource configuration request message to the cloud platform, the method further includes: generating the configuration information of the cloud platform resource; or, receiving the configuration information of the cloud platform resource sent by a near-real time radio intelligent controller, in which the configuration information of the cloud platform resource is configured to determine the cloud resource configuration request message.

Alternatively, generating the configuration information of the cloud platform resource includes: obtaining first data; and generating the configuration information of the cloud platform resource based on the first data, in which the first data includes at least one of: network-related data, or cloud platform-related data.

Alternatively, the configuration information of the cloud platform resource is generated based on second data collected by the near-real time radio intelligent controller in the case that the network function receives the configuration information of the cloud platform resource sent by the near-real time radio intelligent controller, in which the second data includes at least one of: network-related data, or cloud platform-related data.

Alternatively, the network-related data meets at least one of: the network-related data being cell-level data; the network-related data being configured to represent a service traffic and/or a service load and/or a network state; or the network-related data including at least one of: a number of radio resource control connections; a number of active user equipment (UEs); a number of physical resource blocks; a utilization rate of the physical resource blocks; a throughput; a media access control rate; a number of transport blocks; or a packet data convergence protocol data volume.

Alternatively, the cloud platform-related data meets at least one of: the cloud platform-related data being configured to represent a utilization of the cloud platform resource; or the cloud platform-related data including at least one of: a utilization rate of a CPU; a frequency of the CPU; reading and writing times; a temperature of the CPU; a number of CPU tasks; pining information of a CPU core; or a number of CPU cores.

Alternatively, before the network function sends the cloud resource configuration request message and/or receives the cloud platform-related data, the method further includes: obtaining an authority for controlling the cloud platform and/or an authority for data collection.

Alternatively, the method further includes: sending first information to a service management and orchestration function, in which the first information includes at least one of: information for indicating success or failure of updating the configuration information of the cloud platform resource; or a state of the cloud platform resource corresponding to the cloud resource configuration request message.

In a second aspect, there is provided a method for controlling a cloud platform, applied to the cloud platform. The method includes: receiving a cloud resource configuration request message sent by a network function; and configuring a cloud platform resource based on the cloud resource configuration request message.

Alternatively, the network function includes one of: a long term evolution base station; a new radio base station; a centralized unit or a centralized unit of a O-RAN; a distribution unit or a distribution unit of the O-RAN; or a near-real time radio intelligent controller.

Alternatively, the cloud resource configuration request message includes at least one of: a network function identifier; an identifier of a network function instance; configuration information of the cloud platform resource; a timer; or a time offset, in which the timer and/or time offset indicate a time period needed to await before executing the configuration information of the cloud platform resource.

Alternatively, configuring the cloud platform resource based on the cloud resource configuration request message includes: in the case that that the timer and/or time offset are not configured and the network function has an authority for controlling the cloud platform, configuring the cloud platform resource based on the cloud resource configuration request message; or in the case that that the timer and/or time offset are configured and the network function has the authority for controlling the cloud platform, monitoring the cloud resource configuration request message continuously within the timer and/or time offset; and configuring the cloud platform resource based on the received cloud resource configuration request message in response to determining that no new cloud resource configuration request message is monitored within the timer and/or time offset.

Alternatively, the configuration information of the cloud platform resource includes at least one of: a power state of a CPU; a performance state of the CPU; a frequency of the CPU; memory information; pining information of a CPU core; or a number of CPU cores.

Alternatively, the method further includes: sending cloud platform-related data to the network function, in which the cloud platform-related data meets at least one of: the cloud platform-related data being configured to represent a utilization of the cloud platform resource; or the cloud platform-related data including at least one of: a utilization rate of a CPU; a frequency of the CPU; reading and writing times; a temperature of the CPU; a number of CPU tasks; pining information of a CPU core; or a number of CPU cores.

Alternatively, the method further includes: receiving a data collecting request related to the cloud platform sent by the network function.

Alternatively, the method further includes: sending second information to a service management and orchestration function, in which the second information includes at least one of: a response for success or failure of updating a configuration of the cloud platform resource; or a state of the cloud platform resource corresponding to the cloud resource configuration request message.

Alternatively, the cloud platform includes a control node and a work node. The cloud resource configuration request message is sent to the work node by the control node; and/or cloud platform-related data is sent to the network function by the control node; and/or second information is sent to a service management and orchestration function by the control node.

In a third aspect of the disclosure, there is provided an apparatus for controlling a cloud platform, applied to a network function, including: a sending module, configured to send a cloud resource configuration request message to a cloud platform, in which the cloud resource configuration request message is used to configure a cloud platform resource for the network function.

In a fourth aspect of the disclosure, there is provided an apparatus for controlling a cloud platform, applied to the cloud platform, including: a first receiving module, configured to receive a cloud resource configuration request message sent by a network function; and a configuring module, configured to configure a cloud platform resource based on the cloud resource configuration request message.

In a fifth aspect of the disclosure, there is provided a communication device, including: a memory, a transceiver, and a processor. The memory is configured to store a computer program. The processor is configured to realize steps of the method according to the first aspect or the second aspect.

In a sixth aspect of the disclosure, there is provided a processor-readable storage medium having a computer program stored thereon. When the computer program is executed by a processor, steps of the method according to the first aspect or the second aspect are implemented.

In a seventh aspect of the disclosure, there is a computer program product including instructions. The instructions are executed by a processor to cause the processor to execute steps of the method according to the first aspect or the second aspect.

In embodiments of the disclosure, the network function may control the cloud platform resource. For example, the network function may trigger the cloud platform to enter an energy-saving (ES) mode by the cloud resource configuration request message, or may also trigger the cloud platform to recover from the ES mode to a high-performance mode, thereby ensuring a service performance to a maximum extent while saving energy on the cloud platform.

### BRIEF DESCRIPTION OF THE DRAWINGS

FIG. 1 is a schematic diagram illustrating a structure for an open-radio access network (O-RAN).
FIG. 2 is a flow chart illustrating a method for controlling a cloud platform according to embodiments of the disclosure.
FIG. 3 is a flow chart illustrating a method for controlling a cloud platform according to embodiments of the disclosure.
FIG. 4 is a flow chart illustrating a method for controlling a cloud platform according to embodiments of the disclosure.
FIG. 5 is a flow chart illustrating a method for controlling a cloud platform according to embodiments of the disclosure.
FIG. 6 is a flow chart illustrating a method for controlling a cloud platform according to embodiments of the disclosure.
FIG. 7 is a flow chart illustrating a method for controlling a cloud platform according to embodiments of the disclosure.
FIG. 8 is a flow chart illustrating a method for controlling a cloud platform according to embodiments of the disclosure.
FIG. 9 is a flow chart illustrating a method for controlling a cloud platform according to embodiments of the disclosure.
FIG. 10 is a block diagram illustrating an apparatus for controlling a cloud platform according to embodiments of the disclosure.
FIG. 11 is a block diagram illustrating an apparatus for controlling a cloud platform according to embodiments of the disclosure.
FIG. 12 is a block diagram illustrating a communication device according to embodiments of the disclosure.

### DETAILED DESCRIPTION

Clear description is made below to a technical solution in embodiments of the disclosure with reference to accompanying drawings in embodiments of the disclosure. Apparently, embodiments described are only a part of and not all of embodiments of the disclosure. All other embodiments obtained based on embodiments disclosed in the disclosure by the ordinary skilled in the art without creative work should fall within the protection scope of the disclosure.

The terms "first", "second" and the like in the specification and claims of the disclosure are used to distinguish similar objects, and are not used to describe a specific order or sequence. It should be understood that, the terms used in this way may be interchanged in an appropriate condition, such that embodiments of the disclosure may be implemented in an order other than those illustrated or described here. Objects distinguished by the "first" and "second" usually belong to one class, and the number of objects is not limited, for example, the number of a first object may be one or more. In addition, the term "and/or" in the specification and claims means at least one of connected objects, and the character "/" generally means that contextual objects are in an "or" relationship.

Referring to FIG. 2, embodiments of the disclosure provide a method for controlling a cloud platform. An executive subject of the method includes a network function (NF). The NF includes, but is not limited to, an NF of an open-radio access network (O-RAN) and/or an NF instance. The method includes the step at block 201.

At block 201, a cloud resource configuration request message is sent to the cloud platform, in which the cloud resource configuration request message is used to configure a cloud platform resource for the NF.

In embodiments, configuring the cloud platform resource includes updating the cloud platform resource. In other words, the above cloud resource configuration request message may be configured to update a configuration of the cloud platform resource, so as to realize energy-saving or performance adjustment of the cloud platform.

In an alternative implementation, the NF sends the cloud resource configuration request message to the cloud platform through a notification API, to realize triggering the cloud platform to update the configuration of the cloud platform resource with a low delay. The above cloud resource configuration request message may also be called an energy-saving (ES) control request.

In an implementation of the disclosure, the NF includes one of: a long term evolution (LTE) base station (eNB); a new radio (NR) base station (gNB); a centralized unit or a centralized unit of the O-RAN; a distribution unit or a distribution unit of the O-RAN; or an Near-RT RIC.

In an implementation of the disclosure, the cloud resource configuration request message includes at least one of:
(1) an NF identifier;
(2) an identifier of the NF instance;
(3) configuration information of the cloud platform resource, alternatively, the configuration information of the cloud platform resource including, but being not limited to, at least one of an O-Cloud ES policy/configuration and a resource configuration of a cloud platform infrastructure;
(4) a timer; or
(5) a time offset.

The timer and/or time offset are configured to represent a time period needed to await before executing the configuration information of the cloud platform resource, to avoid a decreased service quality caused by frequent modification of the configuration information of the cloud platform resource.

For example, the timer and/or time offset may be set based on a real-time requirement of the NF for controlling the cloud platform resource. In other words, the NF may adjust a final control time of the cloud platform resource based on the timer and/or time offset, so as to match the real-time requirement of the NF.

In case that there needs a high real-time requirement, the timer and/or the time offset is set to a small value. In this way, after the cloud platform enters an ES mode, the cloud platform may be quickly restored to a high-performance mode based on service emergencies and/or an available resource of the cloud platform to meet a service requirement.

In case that there does not need the high real-time requirement, the timer and/or time offset may be set to a large value.

In an implementation of the disclosure, sending the cloud resource configuration request message to the cloud platform includes: monitoring a service traffic and/or a utilization of the cloud platform resource within the time period indicated by the timer and/or the time offset; and sending the cloud resource configuration request message to the cloud platform in case that the service traffic and/or the utilization of the cloud platform resource meets a preset requirement, in which the cloud resource configuration request message includes the configuration information of the cloud platform resource.

The above preset requirement may include that, but be not limited to that, a change of the service traffic is lower than or equal to a first preset value, and an available resource (an idle resource) of the cloud platform is greater than or equal to a second preset value.

In an implementation of the disclosure, the configuration information of the cloud platform resource includes at least one of: (1) a power state of a central processing unit (CPU); (2) a performance state of the CPU, such as a CPU performance state (CPU P-State) or a CPU running state; and a CPU power state or a CPU idle state (CPU C-State); (3) a frequency of the CPU; (4) memory information; (5) pining information of a CPU core; or (6) a number of CPU cores.

In an implementation of the disclosure, before sending the cloud resource configuration request message to the cloud platform, the method further includes one of following ways 1-2.

In way 1, the configuration information of the cloud platform resource is generated.

In way 2, the configuration information of the cloud platform resource is received from the Near-RT RIC.

The configuration information of the cloud platform resource is configured to determine or generate the cloud resource configuration request message.

In an implementation of the disclosure, generating the configuration information of the cloud platform resource includes: obtaining first data; and generating the configuration information of the cloud platform resource based on the first data. The first data includes at least one of: (1) network-related data, or (2) cloud platform-related data.

It should be understood that, the first data is measurement data collected by the NF.

In an implementation of the disclosure, the configuration information of the cloud platform resource is generated based on second data collected by the Near-RT RIC in case that the NF receives the configuration information of the cloud platform resource sent by the Near-RT RIC. The second data includes at least one of: (1) network-related data, or (2) cloud platform-related data.

It may be understood that, the second data is measurement data collected by the Near-RT RIC.

In an implementation of the disclosure, the network-related data meets at least one of:
(1) the network-related data being cell-level data;
(2) the network-related data being configured to represent a service traffic, a service load and/or a network state; or
(3) the network-related data including at least one of: (a) a number of radio resource control (RRC) connections; (b) a number of active UEs; (c) a number of physical resource blocks (PRBs); (d) a utilization rate of the PRBs; (e) a throughput; (f) a media access control (MAC) rate; (g) a number of transport blocks (TBs); or (h) a packet data convergence protocol (PDCP) data volume.

In an implementation of the disclosure, the cloud platform-related data meets at least one of:
(1) the cloud platform-related data being configured to represent a utilization of the cloud platform resource; or
(2) the cloud platform-related data including at least one of: (a) a utilization rate of a CPU; (b) a frequency of the CPU; (c) reading and writing times; (d) a temperature of the CPU; (e) a number of CPU tasks; (f) pining information of a CPU core; or (g) a number of CPU cores.

Before the NF sends the cloud resource configuration request message and/or receives the cloud platform-related data, the method further includes: obtaining an authority for controlling the cloud platform and/or an authority for data collection.

In an implementation of the disclosure, the method further includes: sending first information to an SMO function. The first information includes at least one of: (1) information for indicating success or failure of updating the configuration information of the cloud platform resource; or (2) a state of the cloud platform resource corresponding to the cloud resource configuration request message.

The information for indicating the success or failure of updating the configuration information of the cloud platform resource is a response for the success or failure of updating the cloud resource configuration triggered by the NF.

In embodiments, by sending a configuration condition of the cloud platform resource to the SMO function, a unification may be ensured among the cloud platform, the NF and the SMO function with respect to a cloud platform state.

In the embodiments, the NF may control the cloud platform resource. For example, the NF may trigger the cloud platform to enter the ES mode through the cloud resource configuration request message, and may trigger the cloud platform to recover from the ES mode to the high-performance mode, thereby ensuring the service performance to a maximum extent while saving energy in the cloud platform.

Referring to FIG. 3, embodiments of the disclosure provide a method for controlling a cloud platform. The method is applied to the cloud platform. The method includes steps at blocks 301 and 302.

At block 301, a cloud resource configuration request message is received from an NF.

At block 302, a cloud platform resource is configured based on the cloud resource configuration request message.

In embodiments, configuring the cloud platform resource includes updating the cloud platform resource. In other words, the cloud platform updates a configuration of the cloud platform resource based on the received cloud resource configuration request message, so as to realize energy-saving or performance adjustment of the cloud platform.

In an implementation of the disclosure, the NF includes one of: (1) a LTE eNB; (2) a NR gNB; (3) a centralized unit or a centralized unit of an open-radio access network (O-RAN); (4) a distribution unit or a distribution unit of the O-RAN; or (5) a near-real time radio intelligent controller (Near-RT RIC).

In an implementation of the disclosure, the cloud resource configuration request message includes at least one of: (1) an NF identifier; (2) an identifier of an NF instance; (3) configuration information of the cloud platform resource; (4) a timer; or (5) a time offset. The timer and/or time offset indicate a time period needed to await before executing the configuration information of the cloud platform resource.

For example, the timer in the cloud resource configuration request message is represented by T, and the time offset is represented by "offset". In one case, the configuration information of the cloud platform resource may be executed only after T expires (that is, timeout of the timer). In another case, the configuration information of the cloud platform resource may be executed only after T-offset (T minus offset) expires. In another case, the configuration information of the cloud platform resource may be executed only after T + offset (T plus offset) expires. In yet another case, the time period needed to await before executing the configuration information of the cloud platform resource may be determined based on a protocol agreement or a default timer when the cloud resource configuration request message does not carry the timer.

In an implementation of the disclosure, configuring the cloud platform resource based on the cloud resource configuration request message includes one of the following ways 1-2.

In way 1, in the case that that the timer and/or time offset are not configured and the NF has an authority for controlling the cloud platform, the cloud platform resource is configured based on the cloud resource configuration request message.

In way 2, in the case that that the timer and/or time offset are configured and the NF has an authority for controlling the cloud platform, the cloud resource configuration request message is monitored continuously within the timer and/or time offset; and when no new cloud resource configuration request message is monitored within the timer and/or time offset, the cloud platform resource is configured based on the received cloud resource configuration request message.

In an implementation of the disclosure, the configuration information of the cloud platform resource includes at least one of: (1) a power state of a central processing unit (CPU); (2) a performance state of the CPU; (3) a frequency of the CPU; (4) memory information; (5) pining information of a CPU core; or (6) a number of CPU cores.

In an implementation of the disclosure, the method further includes: sending cloud platform-related data to the NF. The cloud platform-related data meets at least one of: the cloud platform-related data being configured to represent a utilization of the cloud platform resource; or the cloud platform-related data including at least one of: (a) a utilization rate of a CPU; (b) a frequency of the CPU; (c) reading and writing times; (d) a temperature of the CPU; (e) a number of CPU tasks; (f) pining information of a CPU core; or (g) a number of CPU cores.

In an implementation of the disclosure, the method further includes: receiving a data collecting request related to the cloud platform sent by the NF. In an example, the data collecting request related to the cloud platform is used by the NF to obtain an authority for data collection of the cloud platform, thereby allowing the NF to obtain measurement data (such as first data) for the cloud platform, and to generate the configuration information of the cloud platform resource based on the measurement data.

In an implementation of the disclosure, the method further includes: sending second information to the SMO function. The second information includes at least one of: (1) a response for success or failure of updating a configuration of the cloud platform resource; or (2) a state of the cloud platform resource corresponding to the cloud resource configuration request message.

In this way, after the ES policy/ control configuration is executed by the cloud platform, an executing result and a state of the updated resource are reported to the SMO, thereby ensuring an unification among the cloud platform, the NF and the SMO with respect to the cloud platform state.

In an implementation of the disclosure, the cloud platform includes a control node and a work node. The cloud resource configuration request message is sent to the work node by the control node; and/or cloud platform-related data is sent to the NF by the control node; and/or second information is sent to an SMO function by the control node.

In this embodiment, the NF may control the cloud platform resource. For example, the NF may trigger the cloud platform to enter the ES mode by the cloud resource configuration request message, and may trigger the cloud platform to recover from the ES mode to the high-performance mode, thereby ensuring the service performance to a maximum extent while saving energy in the cloud platform.

### Embodiment 1

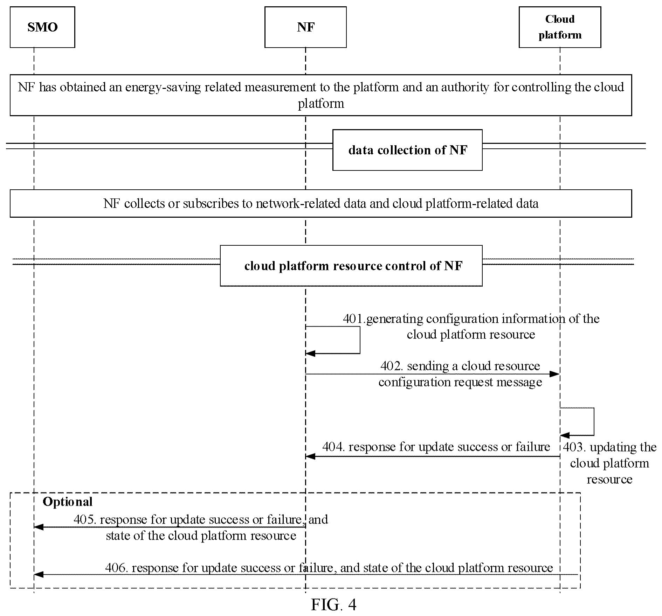

Referring to FIG. 4, in this embodiment, an enhanced interface of the cloud platform in FIG. 1 (such as, an O-RAN notification API interface) is used to support the control of the NF to an infrastructure resource of the cloud platform.

In this embodiment, the NF has obtained an ES related measurement and an authority for controlling the cloud platform.

In this embodiment, the network-related data at a cell level is measured after the NF is deployed or instantiated. The network-related data may include, but be not limited to, at least one of: the number of RRC connections; the number of active UEs; the number of PRBs; the utilization rate of the PRBs; the throughput; the MAC rate; the number of TBs; or the PDCP data volume. The NF may subscribe to the cloud platform-related data from the cloud platform. The cloud platform-related data may include, but not be limited to, at least one of: the utilization rate of the CPU; the frequency of the CPU; the reading and writing times; the temperature of the CPU; the number of CPU tasks; the pining information of the CPU core; or the number of CPU cores.

The network-related data may also be called network state information, and cloud platform-related data may also be called utilization information of the cloud platform resource.

At 401, the NF generates the configuration information of the cloud platform resource based on the collected network-related data and/or cloud platform-related data.

For example, the configuration information of the cloud platform resource includes: a parameter configured based on a set threshold requirement. The parameter includes, but not limited to, at least one of: the power state of the CPU, the performance state of the CPU, the number of CPU cores, the frequency of the CPU (i.e., CPU frequency), the memory information, the pining information of the CPU core, and the timer (T) and/or time offset (offset). The timer and/or time offset indicate the time period needed to await before the configuration information of the cloud platform resource is executed based on different real-time requirements of the NF for controlling the cloud platform resource, so as to avoid the decreased service quality caused by frequent modification of the configuration of the cloud platform resource.

At 402, the NF sends the cloud resource configuration request message to the cloud platform, so as to request to update ES configuration of the cloud platform or to restore a high-performance state from an ES state.

Alternatively, the cloud resource configuration request message includes the NF identifier, the identifier of the NF instance, the configuration of the cloud platform resource, the timer, and/or the time offset.

At 403, the cloud platform updates the cloud platform resource based on the cloud resource configuration request message.

The cloud platform queries whether the NF has the authority for controlling the cloud platform based on the received NF identifier after receiving the cloud resource configuration request message from the NF. The cloud platform updates the cloud platform resource based on the cloud resource configuration request message sent by the NF, when the NF has the authority.

Alternatively, a control instruction sent by the NF is monitored continuously based on the time period indicated by the timer and/or time offset, and the cloud platform resource is updated based on the cloud resource configuration request message sent by the NF when the control instruction is not received from the NF after timeout/expiration.

At 404, the cloud platform sends to the NF, information for indicating a success or failure of updating the configuration information of the cloud platform resource.

At 405, the NF feeds back to the SMO through an O1 interface, the information for indicating the success or failure of updating the configuration information of the cloud platform resource triggered by the NF, and a current state of the cloud platform resource corresponding to the NF.

Alternatively, at 406, after the cloud platform completes the update of the cloud platform resource, the cloud platform feeds back to the SMO through an O2 interface, the information for indicating the success or failure of updating the configuration information of the cloud platform resource triggered by the NF, and a current state of the cloud platform resource corresponding to the NF.

In detail, for setting the control time of the cloud platform resource based on the timer and the time offset involved at the above steps 401- 403, a corresponding implementation is that the NF itself triggers the update of the cloud platform resource based on the timing of time in Embodiment 2, or another implementation is that the cloud platform executes updating the cloud platform resource based on the timing of time in Embodiment 3, to meet a real-time requirement of the NF for controlling the cloud platform resource.

### Embodiment 2: the NF triggers the ES control by timing.

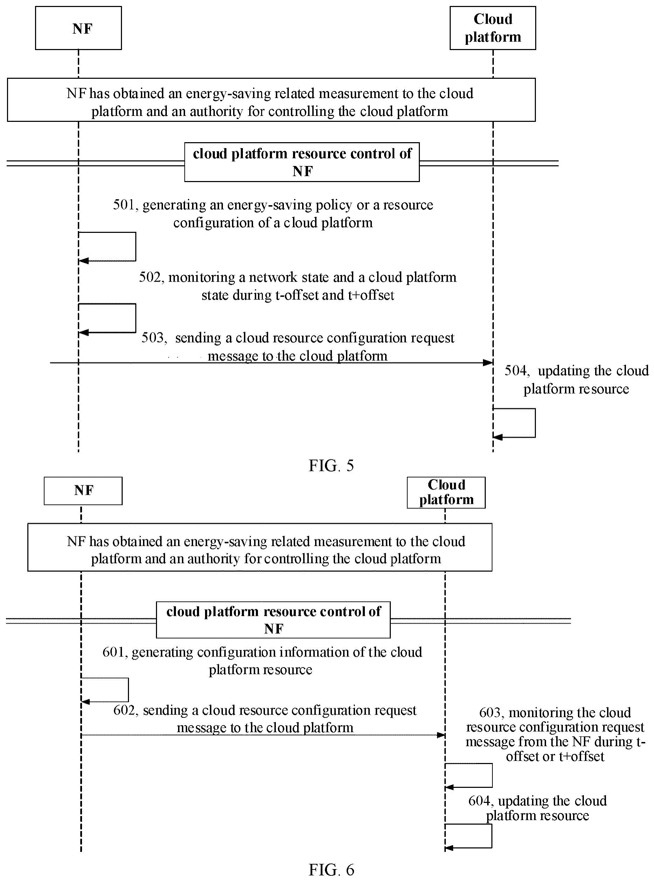

Referring to FIG. 5, embodiments of the disclosure provide a flow chart of a method for controlling a cloud platform, including steps at 501-504.

At 501, the NF generates the configuration information of the cloud platform resource.

At 502, the NF monitors a network state and a cloud platform state during t-offset and t+offset.

At 503, the NF sends a cloud resource configuration request message to the cloud platform.

Alternatively, the cloud resource configuration request message includes the configuration information of the cloud platform resource that needs to be updated.

At 504, the cloud platform executes an update of the cloud platform resource.

In detail, the NF internally defines the timer (t) and the time offset when the configuration information of the cloud platform resource is generated based on different real-time requirements for controlling the cloud platform resource (at 501). The NF continuously collects the network-related data and/or the cloud platform-related data during the time period of t-offset or t+offset, and evaluates the service traffic and/or the utilization of the cloud platform resource (at 502). In case that a time requirement is met, when the service traffic is not changed in a large range and/or the utilization of the cloud platform resource is lower than a preset value, the NF sends the cloud resource configuration request message to the cloud platform, so as to request updating to an ES configuration for the cloud platform or restore the high performance state from the ES state (at 503). The cloud platform executes the update of the cloud platform resource after receiving the cloud resource configuration request message (at 504), as illustrated in FIG. 5.

For example, the NF needs to monitor the service traffic within T1 (T1 = t1+offset1/t1-offset1) continuously after generating configuration information of the cloud platform resource (such as CPU underclocking). In case that the service is relatively stable, the NF sends the cloud resource configuration request message to the cloud platform, including the configuration information of the cloud platform resource that needs to be updated. In case that the an unexpected situation appears in the service traffic within T1, and it is determined/evaluated that the current cloud platform resource is insufficient to meet a requirement of the service traffic based on a utilization condition of the cloud platform resource, the configuration information (such as CPU overclocking /increasing the CPU core, etc.) of the cloud platform resource is regenerated, and the cloud resource configuration request message is sent to the cloud platform immediately after waiting for a T2 time period (for example, T2=0, which requires a high real-time performance), in which the cloud resource configuration request message includes the configuration of the cloud platform resource that needs to be updated.

### Embodiment 3: the cloud platform executes the ES control by timing.

Referring to FIG. 6, embodiments of the disclosure provide a method for controlling a cloud platform, including steps at 601-604.

At 601, the NF generates the configuration information of the cloud platform resource.

At 602, the NF sends a cloud resource configuration request message to the cloud platform.

Alternatively, the cloud resource configuration request message includes the configuration of the cloud platform resource and the timer (t) and/or the time offset, that need to be updated.

At 603, the cloud platform monitors the cloud resource configuration request message from the NF during t-offset or t+offset.

At 604, the cloud platform executes an update of the cloud platform resource.

In detail, the NF internally defines the time (t) of the timer and the time offset (at 601) when the configuration information of the cloud platform resource is generated based on different real-time requirements for controlling the cloud platform resource, and then sends the configuration information of the cloud platform resource, the time of the timer and/or the time offset together to the cloud platform by the cloud resource configuration request message (at 602). At the same time, the NF collects network state information and/or a utilization condition of the cloud platform resource continuously, evaluates the service traffic and the utilization of the cloud platform resource, updates the ES policy in real time and sends the cloud resource configuration request message to the cloud platform. The cloud platform continuously monitors the cloud resource configuration request message from the NF during the time period of t-offset or t+offset after receiving the cloud resource configuration request message (at 603). In case that a new cloud resource configuration request message is not received after the time requirement is met, the cloud platform updates the cloud platform resource based on the cloud resource configuration request message sent by the NF (at 604), as illustrated in FIG. 6.

For example, the NF sends the cloud resource configuration request message to the cloud platform after generating configuration information (such as CPU underclocking) of the cloud platform resource, the time (t1) of the timer and the time offset (offset 1). The cloud resource configuration request message includes the configuration information of the cloud platform resource, the time (t1) of the timer, and/or the time offset (offset 1), and the NF monitors the service traffic continuously. During T1(T1 = t1+offset1/t1-offset1), the cloud platform temporarily does not execute the ES control, and continuously monitors the cloud resource configuration request message from the NF. In case that the NF monitors an unexpected situation in the service traffic within T1, and it is determined/ evaluated that the current cloud platform resource is insufficient to meet the requirement of the service traffic based on the cloud platform resource, the NF regenerates the configuration information (such as CPU overclocking /increasing the CPU core, etc.) of the cloud platform resource and sends the configuration information of the platform resource to the cloud platform. During waiting for T2 time (such as T2=0, which requires a high real-time performance), the O-Cloud immediately abandons the CPU underclocking, and executes a resource update based on the updated configuration information of the cloud platform resource.

In detail, for the method of NF triggering the ES control of the cloud platform, a corresponding implementation is that the ES policy/configuration may be generated by the Near-RT RIC in Embodiment 4, and O-Cloud ES may be triggered through the NF. Another implementation is that the O-Cloud ES may be generated and triggered based on the Near-RT RIC in Embodiment 5.

Embodiment 4: the configuration information of the cloud platform resource is generated by the Near-RT RIC.

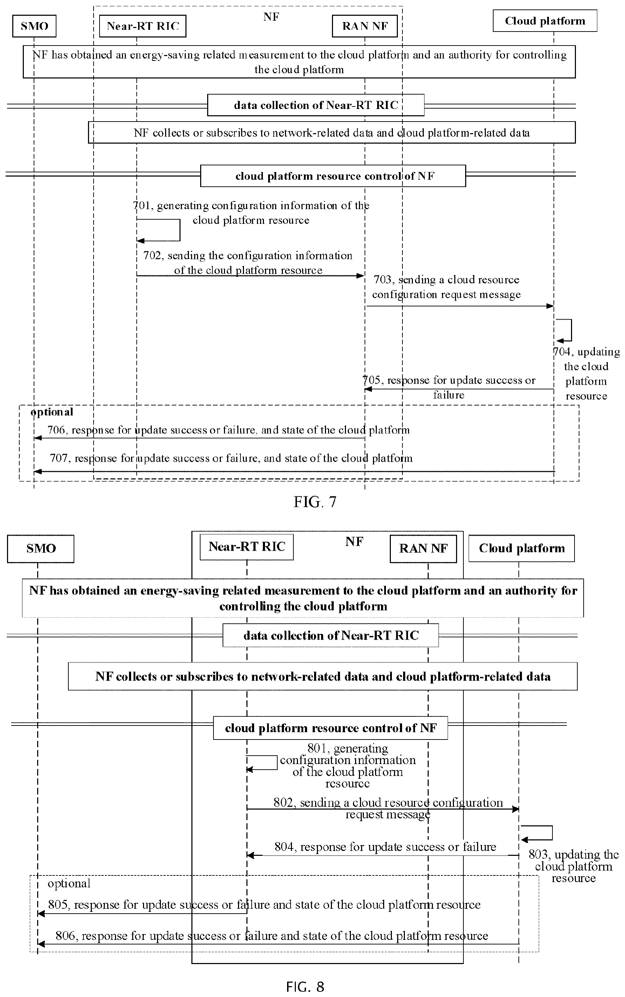

Referring to FIG. 7, embodiments of the disclosure provide a method for controlling a cloud platform, including steps at 701-707.

At 701, the Near-RT RIC generates configuration information of the cloud platform resource.

At 702, the Near-RT RIC sends the configuration information of the cloud platform resource to the RAN NF.

At 703, the RAN NF sends a cloud resource configuration request message to the cloud platform.

At 704, the cloud platform executes an update of the cloud platform resource.

At 705, the cloud platform sends to the RAN NF, information indicating a success or failure of updating the configuration information of the cloud platform resource.

At 706, the RAN NF feeds back to the SMO by the O1 interface, the information indicating the success or failure of updating the configuration information of the cloud platform resource, and the state of the cloud platform resource corresponding to the current RAN NF.

At 707, after the cloud platform completes the update of the cloud platform resource, the cloud platform feeds back to the SMO by the O2 interface, the information indicating the success or failure of updating the configuration information of the cloud platform resource, and the state of the cloud platform resource corresponding to the current RAN NF.

The Near-RT RIC subscribes to network state related data via an E2 interface and subscribes to utilization-related data of an O-Cloud cloud platform resource via a notification API to generate the configuration information of the cloud platform resource (at 701), and sends the configuration information of the cloud platform resource to the RAN NF via an enhanced E2 interface (at 702), such that the NF sends the cloud resource configuration request message to the cloud platform, as illustrated in FIG. 7.

Embodiment 5: the configuration information of the cloud platform resource is generated by a RIC.

Referring to FIG. 8, embodiments of the disclosure provide a method for controlling a cloud platform, including steps at 801-806.

At 801, the Near-RT RIC generates configuration information of the cloud platform resource.

At 802, the Near-RT RIC sends a cloud resource configuration request message to the cloud platform.

At 803, the cloud platform executes an update of the cloud platform resource.

At 804, the cloud platform sends to the Near-RT RIC in the RAN NF, information for indicating a success or failure of updating the configuration information of the cloud platform resource.

At 805, the Near-RT RIC feeds back to SMO, the information for indicating the success or failure of updating the configuration information of the cloud platform resource and the state of the cloud platform resource corresponding to the current RAN NF.

Alternatively, at step 806, after the cloud platform completes the update of the cloud platform resource, the cloud platform feeds back to the SMO via the O2 interface, the information for indicating the success or failure of updating the configuration information of the cloud platform resource and the state of the cloud platform resource corresponding to the current RAN NF.

The Near-RT RIC subscribes to the network state related data via the E2 interface and subscribes to the utilization-related data of the O-Cloud platform resource via the notification API to generate configuration information of the cloud platform resource. Then, the configuration information of the cloud platform resource is sent to the cloud platform via the enhanced notification API (at 802). Finally, the cloud platform feeds back to the SMO, a response for update success/failure triggered by the Near-RT RIC or directly feeds back to the SMO, the response for update success/failure and the cloud platform feeds back the state of the cloud platform resource corresponding to the current RAN NF, as illustrated in FIG. 8.

In detail, for a multi-node deployment scene, a corresponding implementation may realize triggering the cloud platform to save energy across nodes by the NF in Embodiment 6.

Embodiment 6: the NF triggers cross-node saving energy of the cloud platform.

NF triggers the cloud platform to cross-node saving energy. A control node and a work node of the cloud platform are deployed in different physical servers. The control node is mainly responsible for cloud platform management, for example, including infrastructure management IMS, deployment management DMS and so on in the O-RAN architecture, and also including cloud platform notification and data subscription architecture.

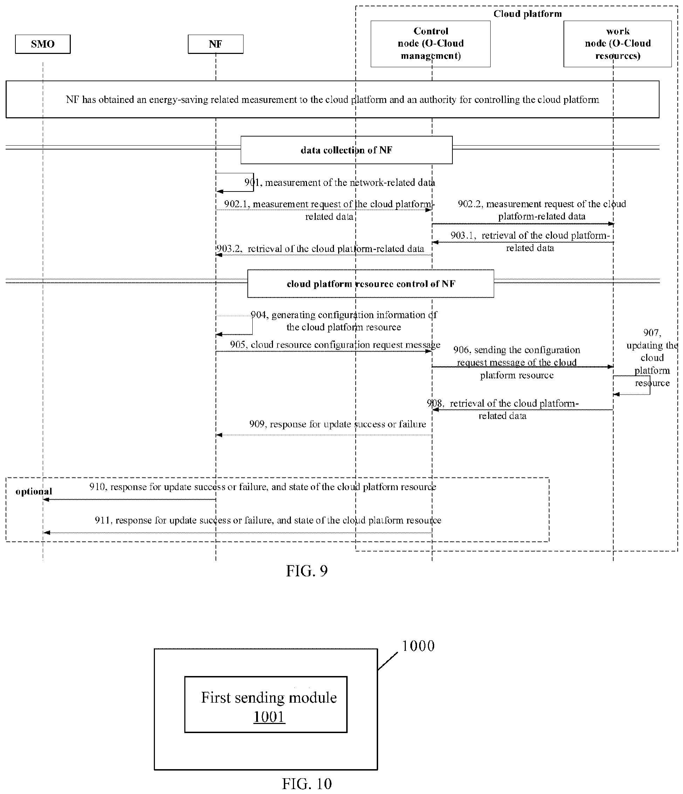

Referring to FIG. 9, embodiments of the disclosure provide a method for controlling a cloud platform, including steps at 901-911.

At 901, the NF executes measurement of the network-related data.

At 902.1, the NF sends a measurement request of the cloud platform-related data to the control node.

At 902.2, the control node sends the measurement request of the cloud platform-related data to the working node.

At 903.1, the working node sends a retrieval of the cloud platform-related data to the control node.

At 903.2, the control node sends the retrieval of the cloud platform-related data to the NF.

At 904, the configuration information of the cloud platform resource is generated based on the received retrieval of the cloud platform-related data.

At 905, the NF sends a cloud resource configuration request message to the control node. The cloud resource configuration request message includes the configuration information of the cloud platform resource.

At 906, the control node sends the configuration information of the cloud platform resource to the working node.

At 907, the work node executes an update of the cloud platform resource based on the received configuration information of the cloud platform resource.

At 908, the work node sends the retrieval of the cloud platform-related data to the control node.

At 909, the control node sends to the NF, information for indicating the success or failure of updating the configuration information of the cloud platform resource.

At 910, the NF feeds back to the SMO via the O1 interface, the information for indicating the success or failure of updating the configuration information of the cloud platform resource and the state of the cloud platform resource corresponding to the current NF.

Alternatively, at 911, after the cloud platform completes the update of the cloud platform resource, the control node feeds back to the SMO, the information for indicating the success or failure of updating the configuration information of the cloud platform resource and the state of the cloud platform resource corresponding to the current NF.

In the process of data collection, the NF needs to collect a resource utilization condition of the work node by the control node of the cloud platform (at 902.1-903.2). Secondly, in the ES control process of the cloud platform, the NF needs to interact with the control node of the cloud platform first, and sends the cloud resource configuration request message to the control node of the cloud platform (O-Cloud IMS or DMS) (at 905). Then, the control node sends the configuration information of the cloud platform resource to the work node (at 906). Finally, the work node also needs to send a response to the NF via the control node (at 908 and 909), and notifies the SMO of the state of the cloud platform resource via the control node, as illustrated in FIG. 9.

In an implementation of the disclosure, after the NF obtains the ES related measurement and the authority for controlling the cloud platform, the NF may generate the configuration information of the cloud platform resource based on the network state information and/or the utilization state of the cloud platform resource that are continuously collected and subscribed. This embodiment may be oriented to the ES control with the high real-time requirement, especially to a situation where after the cloud platform enters the ES mode, a CPU high-performance mode of the cloud platform may be quickly restored based on an unexpected service condition and an available resource condition of the cloud platform, so as to meet the service requirement. By enhancing a control interface between the NF and the cloud platform, the NF is supported to send the cloud resource configuration request message to the cloud platform, thereby realizing near-real time resource update of the cloud platform, and adjusting a final control time of the cloud platform resource based on the timer and/or the time offset, which matches the real-time requirement of the NF. Finally, the enhanced cloud platform sends the control state update of the cloud platform resource to the SMO via the NF or directly, informs the SMO that the update of the cloud platform resource by the NF is completed, and informs the SMO of the updated state, thereby realizing a cloud platform resource consistency between the SMO and the cloud platform for the NF.

Referring to FIG. 10, embodiments of the disclosure provide an apparatus for controlling a cloud platform, applied to an NF. The apparatus 1000 includes: a first sending module 1001, configured to send a cloud resource configuration request message to the cloud platform, in which the cloud resource configuration request message is used to configure a cloud platform resource for the NF.

In an implementation of the disclosure, the NF includes one of: (1) an LTE eNB; (2) an NR gNB; (3) a centralized unit or a centralized unit of an O-RAN; (4) a distribution unit or a distribution unit of the O-RAN; or (5) an Near-RT RIC.

In an implementation of the disclosure, the cloud resource configuration request message includes at least one of: (1) an NF identifier; (2) an identifier of an NF instance; (3) configuration information of the cloud platform resource; (4) a timer; or (5) a time offset.

The timer and/or time offset indicate a time period needed to await before executing the configuration information of the cloud platform resource.

In an implementation of the disclosure, the first sending module 1001 is further configured to: monitor a service traffic and/or a utilization of the cloud platform resource within the time period indicated by the timer and/or the time offset; and send the cloud resource configuration request message to the cloud platform in the case that the service traffic and/or the utilization of the cloud platform resource meets a preset requirement, in which the cloud resource configuration request message includes the configuration information of the cloud platform resource.

In an implementation of the disclosure, the configuration information of the cloud platform resource includes at least one of: (1) a power state of a CPU; (2) a performance state of the CPU; (3) a frequency of the CPU; (4) memory information; (5) pining information of a CPU core; or (6) a number of CPU cores.

In an implementation of the disclosure, before sending the cloud resource configuration request message to the cloud platform, the method further includes one of following ways 1-2.

In way 1, the configuration information of the cloud platform resource is generated.

In way 2, the configuration information of the cloud platform resource is received from the Near-RT RIC.

The configuration information of the cloud platform resource is configured to determine the cloud resource configuration request message.

In an implementation of the disclosure, generating the configuration information of the cloud platform resource includes: obtaining first data; and generating the configuration information of the cloud platform resource based on the first data. The first data includes at least one of: (1) network-related data, or (2) cloud platform-related data.

In an implementation of the disclosure, the configuration information of the cloud platform resource is generated based on second data collected by the Near-RT RIC in case that the NF receives the configuration information of the cloud platform resource sent by the Near-RT RIC. The second data includes at least one of: (1) network-related data, or (2) cloud platform-related data.

In an implementation of the disclosure, the network-related data meets at least one of:
(1) the network-related data being cell-level data;
(2) the network-related data being configured to represent a service traffic and/or a service load and/or a network state; or
(3) the network-related data including at least one of: (a) a number of RRC connections; (b) a number of active UEs; (c) a number of PRBs; (d) a utilization rate of the PRBs; (e) a throughput; (f) a MAC rate; (g) a number of TBs; or (h) a PDCP data volume.

In an implementation of the disclosure, the cloud platform-related data meets at least one of:
(1) the cloud platform-related data being configured to represent a utilization of the cloud platform resource; or
(2) the cloud platform-related data including at least one of: (a) a utilization rate of a central processing unit (CPU); (b) a frequency of the CPU; (c) reading and writing times; (d) a temperature of the CPU; (e) a number of CPU tasks; (f) pining information of a CPU core; or (g) a number of CPU cores.

In an implementation of the disclosure, the apparatus further includes: a second sending module, configured to send first information. The first information is configured to indicate or trigger the cloud platform to update the cloud platform resource.

In an implementation of the disclosure, the apparatus further includes: an obtaining module, configured to obtain an authority for controlling the cloud platform and/or an authority for data collection.

In an implementation of the disclosure, the apparatus further includes: a third sending module, configured to send first information to an SMO function. The first information includes at least one of: (1) information for indicating success or failure of updating the configuration information of the cloud platform resource; or (2) a state of the cloud platform resource corresponding to the cloud resource configuration request message.

In embodiments of the disclosure, the apparatus may realize various processes realized in the method embodiment illustrated in FIG. 2 of the disclosure, with the same beneficial effects, which are not repeated here.

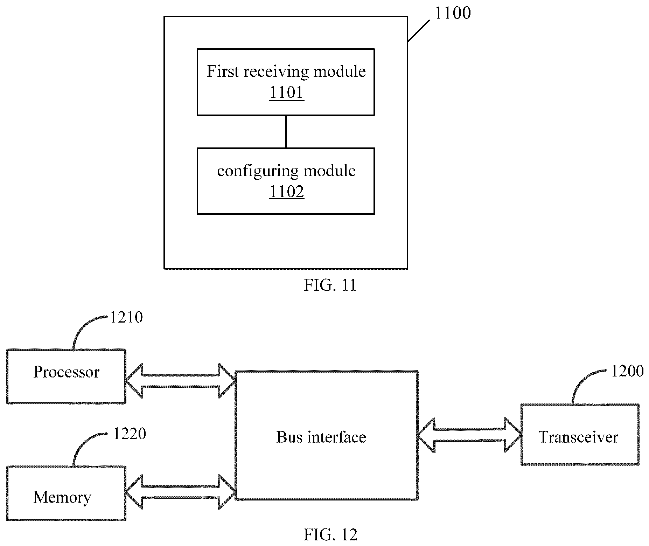

Referring to FIG. 11, embodiments of the disclosure provide an apparatus for controlling a cloud platform, applied to the cloud platform. The apparatus 1100 includes: a first receiving module 1101, configured to receive a cloud resource configuration request message sent by an NF; and a configuring module 1102, configured to configure a cloud platform resource based on the cloud resource configuration request message.

In an implementation of the disclosure, the NF includes one of: (1) an LTE eNB; (2) an NR gNB; (3) a centralized unit or a centralized unit of an O-RAN; (4) a distribution unit or a distribution unit of the O-RAN; or (5) a Near-RT RIC.

In an implementation of the disclosure, the cloud resource configuration request message includes at least one of: (1) an NF identifier; (2) an identifier of an NF instance; (3) configuration information of the cloud platform resource; (4) a timer; or (5) a time offset. The timer and/or time offset indicate a time period needed to await before executing the configuration information of the cloud platform resource.

In an implementation of the disclosure, the configuring module 1102 is further configured to: in the case that that the timer and/or time offset are not configured and the NF has an authority for controlling the cloud platform, configure the cloud platform resource based on the cloud resource configuration request message; or
in the case that that the timer and/or time offset are configured and the NF has the authority for controlling the cloud platform, monitor the cloud resource configuration request message continuously within the timer and/or time offset; and configure the cloud platform resource based on the received cloud resource configuration request message in response to determining that no new cloud resource configuration request message is monitored within the timer and/or time offset.

In an implementation of the disclosure, the configuration information of the cloud platform resource includes at least one of: (1) a power state of a CPU; (2) a performance state of the CPU; (3) a frequency of the CPU; (4) memory information; (5) pining information of a CPU core; or (6) a number of CPU cores.

In an implementation of the disclosure, the apparatus further includes: a third sending module, configured to send cloud platform-related data to the NF. The cloud platform-related data meets at least one of:
the cloud platform-related data being configured to represent a utilization of the cloud platform resource; or
the cloud platform-related data comprising at least one of: a utilization rate of a CPU; a frequency of the CPU; reading and writing times; a temperature of the CPU; a number of CPU tasks; pining information of a CPU core; or a number of CPU cores.

In an implementation of the disclosure, the apparatus further includes: a second receiving module, configured to receive a data collecting request related to the cloud platform sent by the NF.

In an implementation of the disclosure, the apparatus further includes: a fourth sending module, configured to send second information to the SMO function. The second information includes at least one of:
(1) a response for success or failure of updating a configuration of the cloud platform resource; or
(2) a state of the cloud platform resource corresponding to the cloud resource configuration request message.

In an implementation of the disclosure, the cloud platform includes a control node and a work node. The cloud resource configuration request message is sent to the work node by the control node; and/or the cloud platform-related data is sent to the NF by the control node; and/or the second information is sent to the SMO function by the control node.

In embodiments of the disclosure, the apparatus may realize various processes realized in the method embodiment illustrated in FIG. 3 of the disclosure, with the same beneficial effects, which are not repeated here.

It should be noted that, the division of modules in embodiments of the disclosure is schematic, only a logical function division, and there may be another division way in an actual implementation. In addition, each functional module in each embodiment of the disclosure may be integrated into a processing module, or each module may exist physically alone, or two or more modules may be integrated into a module. The above integrated modules may be realized in the form of hardware or software functional unit.

When the integrated module is realized in the form of software function unit and is sold or used as a standalone product, the integrated module may be stored in a computer readable storage medium. Based on such understanding, the technical solution of the disclosure may be embodied in form of a software product in essence or the part that has contributed to the related art or all or part of the technical solution. The computer software product is stored in a storage medium and includes several instructions to enable a computer device (which may be a personal computer, a server, a network device, etc.) or a processor to perform all or part of the steps of the method described in various embodiments of the disclosure. The aforementioned storage medium include: a media that may store program codes, such as a U disk, a mobile hard disk, a read-only memory (ROM), a random access memory (RAM), a magnetic disk, an optical disk or the like.

As illustrated in FIG. 12, embodiments of the disclosure also provide a communication device, which includes a memory 1220, a transceiver 1200, and a processor 1210. The memory 1200 is configured to store a computer programs. The processor 1210 is configured to read the computer program in the memory.

In FIG. 12, a bus architecture may include any number of interconnected buses and bridges. In detail, one or more processors represented by the processor 1210 and various circuits of the memory represented by the memory 1220 are linked together. The bus architecture may also link various other circuits, such as a peripheral device, a voltage regulator, a power management circuit, and the like, which are well known in the art, and so not be further described here. A bus interface provides an interface. A transceiver 1200 may be a plurality of elements, i.e., include a transmitter and a transceiver, and provide a unit for communicating with various other devices on a transmission medium. The processor 1210 is responsible for managing the bus architecture and general processing. The memory 1220 may store data used by the processor 1210 when performing operations.

The processor 1210 may be a central processing unit (CPU), an application specific integrated circuit (ASIC), a field-programmable gate array (FPGA) or a complex programmable logic device (CPLD). The processor may also adopt a multi-core architecture.

It should be noted here that, the communication device provided by embodiments of the invention may realize all the method steps realized by embodiments of the methods applied to the NF and the cloud platform, and may achieve the same technical effect, so the same parts and beneficial effects of this embodiment as those of the method embodiments are not detailed here.

In addition, detailed embodiments of the invention also provide a non-transitory processor-readable storage medium having a computer program stored thereon. The program, when executed by the processor, realizes the steps of the above method for controlling the cloud platform, and may achieve the same technical effect, which is not repeated here in order to avoid repetition. The readable storage medium may be any available medium or data storage device that the processor may access, including but not limited to, a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as an ROM, an EPROM, an EEPROM, a nonvolatile memory (NAND FLASH), a solid-state disk (SSD), and the like.

It should be noted that, the technical solution according to embodiments of the disclosure may be applied to various systems, especially a 5G system. For example, the applicable system may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These systems all include a terminal device and a network device. The system may also include a core network part, such as an evolved packet system (EPS), a 5G system (5GS), etc.

Those skilled in the art would readily appreciate that, embodiments of the disclosure may be manifested as methods, systems, or computer program products. Consequently, embodiments of the disclosure may take the form of purely hardware, purely software, or a hybrid of both hardware and software constituents. Moreover, the disclosure may take a form of a computer program product embodied on one or more computer usable storage media (including but not limited to, a magnetic disk storage and an optical storage, etc.) which includes computer usable program codes.

The disclosure is described with reference to flowcharts and/or block diagrams depicting methods, apparatus (systems), and computer program products according to embodiments of the disclosure. It should be understood that each step and/or block depicted in the flowchart and/or block diagram, as well as combinations of steps and/or blocks therein, can be realized through computer program instructions. Such computer program instructions can be furnished to a general-purpose computer, a dedicated special-purpose computer, an embedded processor, or any other programmable data processing apparatus, thereby creating a machine whereby the execution of instructions by the processor of the computer or other programmable data processing apparatus results in the creation of an apparatus that realizes the functions stipulated in one or more steps of the flowchart and/or one or more blocks of the block diagram.

These computer program instructions may also be stored in a computer-readable memory that directs a computer or other programmable data processing apparatus to operate in a specific manner, thus resulting in a manufactured article embodied in the processor-readable memory that includes an instruction device which implements the functions specified in one or more processes or blocks within a flowchart or block diagram.

These processor-executable instructions may also be loaded into a computer or other programmable data processing apparatus, such that a series of operational steps are performed in the computer or other programmable apparatus to produce a computer-implemented process, thus the instructions which are executed on the computer or other programmable apparatus provide steps for implementing the functions specified in one or more processes or blocks within a flowchart or block diagram.

Various modifications and variations may be made to the disclosure by those skilled in the art without departing from the spirit and scope of the disclosure. Thus, when these modifications and variations of the disclosure are within the scope of the claims of the disclosure and their equivalents, the disclosure is also intended to include these modifications and variations.

## Claims

1. A method for controlling a cloud platform, applied to a network function, comprising:
sending a cloud resource configuration request message to the cloud platform, wherein the cloud resource configuration request message is used to configure a cloud platform resource for the network function.

2. The method of claim 1, wherein the network function comprises one of: a long term evolution base station; a new radio base station; a centralized unit or a centralized unit of an open-radio access network (O-RAN); a distribution unit or a distribution unit of the O-RAN; or a near-real time radio intelligent controller.

3. The method of claim 1, wherein the cloud resource configuration request message comprises at least one of: a network function identifier; an identifier of a network function instance; configuration information of the cloud platform resource; a timer; or a time offset,
wherein the timer and/or time offset indicate a time period needed to await before executing the configuration information of the cloud platform resource.

4. The method of claim 3, wherein sending the cloud resource configuration request message to the cloud platform comprises:
monitoring a service traffic and/or a utilization of the cloud platform resource within the time period indicated by the timer and/or the time offset; and
sending the cloud resource configuration request message to the cloud platform in the case that the service traffic and/or the utilization of the cloud platform resource meets a preset requirement, wherein the cloud resource configuration request message comprises the configuration information of the cloud platform resource.

5. The method of claim 3, wherein the configuration information of the cloud platform resource comprises at least one of: a power state of a central processing unit (CPU); a performance state of the CPU; a frequency of the CPU; memory information; pining information of a CPU core; or a number of CPU cores.

6. The method of claim 1, before sending the cloud resource configuration request message to the cloud platform, further comprising:
generating configuration information of the cloud platform resource; or,
receiving the configuration information of the cloud platform resource sent by a near-real time radio intelligent controller, wherein the configuration information of the cloud platform resource is configured to determine the cloud resource configuration request message.

7. The method of claim 6, wherein generating the configuration information of the cloud platform resource comprises:
obtaining first data; and
generating the configuration information of the cloud platform resource based on the first data, wherein the first data comprises at least one of: network-related data, or cloud platform-related data.

8. The method of claim 6, wherein the configuration information of the cloud platform resource is generated based on second data collected by the near-real time radio intelligent controller in the case that the network function receives the configuration information of the cloud platform resource sent by the near-real time radio intelligent controller,
wherein the second data comprises at least one of: network-related data, or cloud platform-related data.

9. The method of claim 7 or 8, wherein the network-related data meets at least one of:
the network-related data being cell-level data;
the network-related data being configured to represent a service traffic and/or a service load and/or a network state; or
the network-related data comprising at least one of: a number of radio resource control connections; a number of active user equipment UEs; a number of physical resource blocks; a utilization rate of the physical resource blocks; a throughput; a media access control rate; a number of transport blocks; or a packet data convergence protocol data volume.

10. The method of claim 7 or 8, wherein the cloud platform-related data meets at least one of:
the cloud platform-related data being configured to represent a utilization of the cloud platform resource; or
the cloud platform-related data comprising at least one of: a utilization rate of a central processing unit (CPU); a frequency of the CPU; reading and writing times; a temperature of the CPU; a number of CPU tasks; pining information of a CPU core; or a number of CPU cores.

11. The method of claim 1, 3, 4 or 5, before the network function sends the cloud resource configuration request message and/or receives the cloud platform-related data, further comprising:
obtaining an authority for controlling the cloud platform and/or an authority for data collection.

12. The method of claim 1, further comprising:
sending first information to a service management and orchestration function, wherein the first information comprises at least one of:
information for indicating success or failure of updating the configuration information of the cloud platform resource; or
a state of the cloud platform resource corresponding to the cloud resource configuration request message.

13. A method for controlling a cloud platform, applied to the cloud platform, comprising:
receiving a cloud resource configuration request message sent by a network function; and
configuring a cloud platform resource based on the cloud resource configuration request message.

14. The method of claim 13, wherein the network function comprises one of: a long term evolution base station; a new radio base station; a centralized unit or a centralized unit of an open-radio access network (O-RAN); a distribution unit or a distribution unit of the O-RAN; or a near-real time radio intelligent controller.

15. The method of claim 13, wherein the cloud resource configuration request message comprises at least one of: a network function identifier; an identifier of a network function instance; configuration information of the cloud platform resource; a timer; or a time offset;
wherein the timer and/or time offset indicate a time period needed to await before executing the configuration information of the cloud platform resource.

16. The method of claim 15, wherein configuring the cloud platform resource based on the cloud resource configuration request message comprises:
in the case that that the timer and/or time offset are not configured and the network function has an authority for controlling the cloud platform, configuring the cloud platform resource based on the cloud resource configuration request message; or
in the case that that the timer and/or time offset are configured and the network function has the authority for controlling the cloud platform, monitoring the cloud resource configuration request message continuously within the timer and/or time offset; and configuring the cloud platform resource based on the received cloud resource configuration request message in response to determining that no new cloud resource configuration request message is monitored within the timer and/or time offset.

17. The method of claim 15, wherein the configuration information of the cloud platform resource comprises at least one of: a power state of a central processing unit (CPU); a performance state of the CPU; a frequency of the CPU; memory information; pining information of a CPU core; or a number of CPU cores.

18. The method of claim 13, further comprising:
sending cloud platform-related data to the network function, wherein the cloud platform-related data meets at least one of:
the cloud platform-related data being configured to represent a utilization of the cloud platform resource; or
the cloud platform-related data comprising at least one of: a utilization rate of a central processing unit (CPU); a frequency of the CPU; reading and writing times; a temperature of the CPU; a number of CPU tasks; pining information of a CPU core; or a number of CPU cores.

19. The method of claim 18, further comprising:
receiving a data collecting request related to the cloud platform sent by the network function.

20. The method of claim 13, further comprising:
sending second information to a service management and orchestration function, wherein the second information comprises at least one of:
a response for success or failure of updating a configuration of the cloud platform resource; or
a state of the cloud platform resource corresponding to the cloud resource configuration request message.

21. The method of claim 13, 18 or 20, wherein the cloud platform comprises a control node and a work node,
the cloud resource configuration request message is sent to the work node by the control node; and/or
cloud platform-related data is sent to the network function by the control node; and/or
second information is sent to a service management and orchestration function by the control node.

22. An apparatus for controlling a cloud platform, applied to a network function, comprising:
a sending module, configured to send a cloud resource configuration request message to the cloud platform, wherein the cloud resource configuration request message is used to configure a cloud platform resource for the network function.

23. An apparatus for controlling a cloud platform, applied to the cloud platform, comprising:
a first receiving module, configured to receive a cloud resource configuration request message sent by a network function; and
a configuring module, configured to configure a cloud platform resource based on the cloud resource configuration request message.

24. A communication device, comprising: a memory, a transceiver, and a processor, wherein the memory is configured to store a computer program, and the processor is configured to realize the method according to any one of claims 1 to 12 or the method according to any one of claims 12 to 21.

25. A processor-readable storage medium having a computer program stored thereon, wherein, when the computer program is executed by a processor, the method according to any one of claims 1 to 12 or the method according to any one of claims 12 to 21 is implemented.

26. A computer program product comprising instructions, wherein the instructions are executed by a processor to cause the processor to execute the method according to any one of claims 1 to 12 or the method according to any one of claims 12 to 21.
